# DEMANDE DE BREVET EUROPEEN

(11) **EP 1 236 977 A1**
(43) Date de publication de la demande: **04.09.2002**
(21) Numéro de dépôt: 01104931.9
(22) Date de dépôt: 28.02.2001
(51) Int. Cl.: G01F 23/04

(54) **Indicateur de vidange pour microstation d'epuration d'eau**

(71) Demandeur: EPUR S.A., 4000 Liege (BE)
(72) Inventeur: Hartenstein, Marcel, 4122 Plainevaux (BE)
(74) Mandataire: Kihn, Pierre Emile Joseph

(57) **Abrégé**

L'invention concerne un dispositif d'indication de vidange C pour (micro)station d'épuration d'eau (à compartiment de dégraissage des eaux), comprenant :
- une section horizontale D destinée à être placée sous la croûte de graisse et empêchant de lever le dispositif au-delà du niveau inférieur de la croûte de graisse,
- une section verticale E fixée en sa partie inférieure à la section horizontale D,
- une poignée I fixée à la partie supérieure de la section verticale E, servant à saisir et à soulever le dispositif, et
- une graduation F prévue sur la section verticale E permettant de juger du degré de nécessité de vidange.

## Description

La présente invention concerne un dispositif d'indication de vidange pour microstations d'épuration d'eau à compartiment de dégraissage des eaux et l'utilisation d'un tel dispositif pour déterminer le moment optimum pour la vidange.

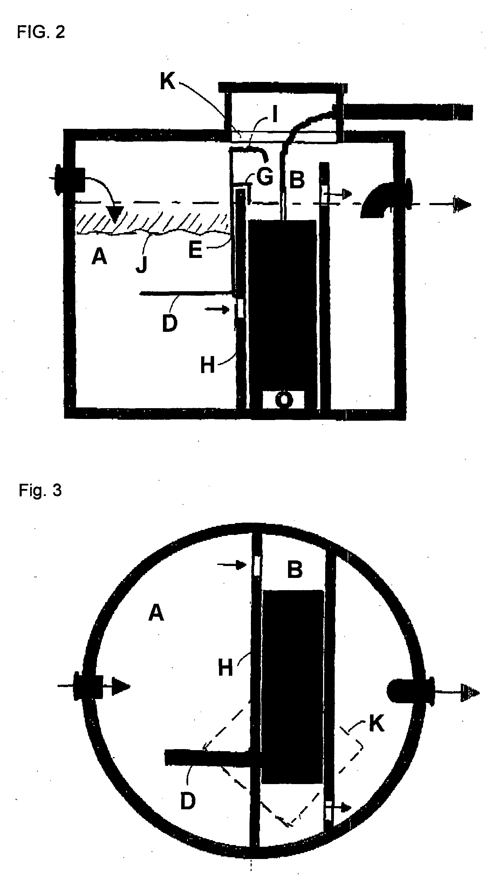

L'épuration individuelle des eaux domestiques peut être réalisée grâce à des petites stations (microstations) d'épuration qui sont par exemple des stations mono-cuve à plusieurs compartiments (Fig. 2 et 3). L'eau passe successivement par les compartiments intégrant chacun une fonction différente, notamment le dégraissage des eaux A, la dégradation microbiologique B, la décantation, etc.

Dans les stations à fonction de dégraissage des eaux, celle-ci se réalise en règle générale dans un premier compartiment A de la cuve par flottement des surnageants (graisses, savon, mousses, etc.) qui forment en surface de ce compartiment une croûte qui s'épaissit au cours du temps. Les eaux dégraissées s'écoulent dans le compartiment suivant par un orifice situé à une certaine distance en dessous du niveau de remplissage de la cuve. Afin d'éviter l'obstruction de l'orifice de passage vers le compartiment suivant et donc l'obstruction de la station d'épuration, il faut impérativement vidanger le compartiment de dégraissage avant que la surface inférieure de la croûte n'atteigne le niveau de l'orifice.

Or l'évaluation de l'épaisseur de cette croûte - et donc la nécessité de vidange - est difficile et d'autant plus aléatoire que la quantité de graisse extraite peut varier fortement dans le temps, même pour un ménage déterminé. Une vidange trop fréquente engendre d'autre part des frais importants pour l'usager.

Dès lors, l'objectif de la présente invention est de proposer un dispositif permettant à l'usager de déterminer l'épaisseur de la croûte de graisse et donc le degré de nécessité de vidange du compartiment de dégraissage de sa station d'épuration d'eau.

La présente invention propose un dispositif d'indication de vidange C pour (micro)station d'épuration d'eau à compartiment de dégraissage des eaux, comprenant :
- une section horizontale D destinée à être placée sous la croûte de graisse et empêchant de lever le dispositif au-delà du niveau inférieur de la croûte de graisse,
- une section verticale E fixée en sa partie inférieure à la section horizontale D,
- une poignée I fixée à la partie supérieure de la section verticale E, servant à saisir et à soulever le dispositif, et
- une graduation F prévue sur la section verticale E permettant de juger du degré de nécessité de vidange.

En pratique, il suffira à l'usager de soulever le dispositif C installé dans le compartiment de dégraissage A d'une station d'épuration en le prenant par la poignée I, jusqu'à ce que la section horizontale D touche la surface inférieure de la croûte de graisse J. La graduation F permet alors d'évaluer l'épaisseur de cette croûte et donc la nécessité ou l'urgence d'une vidange de ce compartiment.

Ce dispositif utilisé dans une station d'épuration d'eau permet de réduire sensiblement les coûts de vidange, tout en réduisant nettement le risque d'une obstruction de la station. D'autres avantages de l'invention résident dans sa simplicité d'exécution et d'utilisation. Un autre atout de ce dispositif est qu'il est également possible d'en équiper des stations d'épuration existantes sans devoir procéder à une quelconque modification de la station elle-même.

La section horizontale D peut être de forme et de taille quelconque du moment qu'elle offre une résistance suffisante au contact de la surface inférieure de la croûte lors du levage du dispositif.

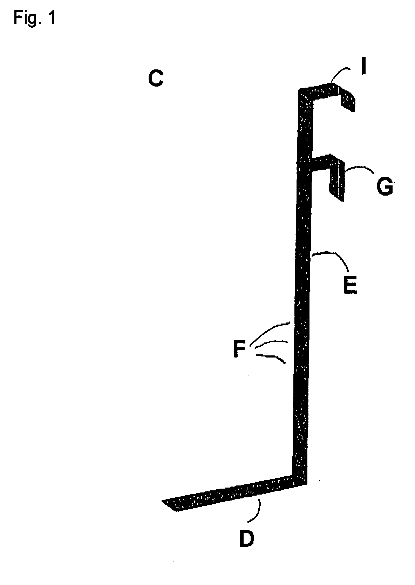

La longueur de la section verticale E est fonction des dimensions de la station d'épuration et elle est déterminée en principe par la position de l'orifice d'écoulement des eaux du compartiment A vers le compartiment B (ou autrement dit par l'épaisseur maximale de la croûte de graisse) et la position souhaitée de la poignée. Cette section E sera généralement droite, comme montré à la Fig. 1, mais sa forme peut être adaptée pour des raisons techniques.

La poignée I sert primairement à tenir le dispositif en main pour le soulever et sa forme est de préférence adaptée en sorte. Elle peut cependant servir secondairement à déposer ou à accrocher le dispositif en cas de non-utilisation (position au repos ou abaissée).

La graduation F sert à estimer l'épaisseur de la croûte et par voie de conséquence l'urgence de la vidange du compartiment A. En principe, la surface supérieure de la couche de graisse est le repère fixe (référence) par rapport auquel on compare un ou plusieurs repères prévus sur le dispositif.

Dans sa version la plus simple, la graduation F peut se réduire à un unique repère qui, dès qu'il n'est plus visible, indique que l'épaisseur maximale admissible de la croûte est atteinte et qu'il faut procéder d'urgence à la vidange.

De préférence, la graduation comportera cependant plusieurs repères qui peuvent être faits sous forme de rainures, d'encoches ou d'autres moyens de visualisation, par exemple une échelle en pour-cent ou un code couleur vert-orange-rouge, où la couleur rouge indique que la vidange doit être effectuée immédiatement.

Il existe cependant plusieurs inconvénients à prendre la surface supérieure de la croûte comme référence. D'une part, la graduation est peu visible de l'usager dû sa position relative lors de la mesure et à l'absence d'éclairage à l'intérieur de la station. D'autre part, la lisibilité est réduite davantage par l'encrassement inévitable d'une telle graduation.

En réalité, la référence est la position de l'orifice entre les compartiments A et B par rapport au niveau de remplissage de la cuve (qui est fixe pendant l'opération normale de la station). La référence peut par conséquent être n'importe quel autre point (fixe) de la station même, par exemple un point donné à l'intérieur de l'orifice de visite. La graduation F se trouvera de préférence sur la partie supérieure de la section verticale E.

Inversement, on peut aussi envisager que la graduation F est fixée sur la station, par exemple à l'intérieur de l'orifice de visite et que le dispositif ne comporte alors qu'un seul repère dont la position par rapport à la graduation indique l'épaisseur de la couche.

Dans une forme de réalisation préférée, le dispositif selon l'invention comprend en outre :
- un cavalier G fixé à la section verticale E et destiné à déposer ou à accrocher le dispositif sur une des cloisons de la (micro)station d'épuration de telle sorte que la section horizontale D se trouve à une hauteur utile et que la poignée I est facilement accessible.

L'avantage de cette forme de réalisation est d'améliorer l'ergonomie du dispositif. En effet, le cavalier G permet de poser ou d'accrocher le dispositif à une hauteur qui facilite d'une part l'accès de l'usager à la poignée et qui réduit d'autre part la hauteur sur laquelle l'usager devra soulever le dispositif avant d'atteindre la couche inférieure J de la croûte de graisse. La forme, les dimensions et la position du cavalier seront fonction des dimensions caractéristiques de la station d'épuration que l'on souhaite équiper.

Le dispositif selon l'invention peut être placé sous la trappe de visite de la (micro)station d'épuration. Cette version est particulièrement adaptée pour équiper des stations existantes, parce qu'elle n'exige aucune mesure de transformation ou de modification au niveau de la station elle-même. Il suffira à l'usager d'ouvrir la trappe de visite pour accéder à la poignée du dispositif.

Une autre variante de la présente invention propose un dispositif qui est caractérisé par le fait que la poignée I dépasse de la trappe de visite de la (micro)station et que le dispositif peut être utilisé sans ouvrir la trappe de visite.

Un tel dispositif est particulièrement facile, confortable et rapide à utiliser, puisqu'il n'exige pas l'ouverture de la trappe de visite, mais il est accessible directement de l'extérieur. Il est spécialement adapté pour l'intégration dans des nouvelles stations d'épuration, parce qu'il nécessite un orifice de passage, par exemple une perforation ou une découpe pratiquée dans la trappe, ou un passage accessoire spécifiquement prévu à cet effet, par exemple un tuyau adjacent ou proche de l'ouverture de visite. Ce passage est conçu préférentiellement de manière à se refermer plus ou moins hermétiquement autour de la section verticale du dispositif, du moins lorsque ce dernier se trouve en position de repos (position abaissée). La référence pour la graduation pourrait dans ce cas être le bord supérieur de la trappe de visite ou du tuyau.

Surtout dans le cas de l'équipement de stations existantes, quelle qu'en soit la marque ou le modèle, mais également pour des considérations économiques de fabrication en série, il peut être préférable d'augmenter le caractère universel du dispositif C en rendant certaines de ses caractéristiques dimensionnelles variables ou réglables par l'installateur ou même par l'usager.

Une de ces variantes plus universelles est caractérisée par le fait que la hauteur de fixation et/ou l'ouverture du cavalier G sont réglables de façon à pouvoir être adaptées aux dimensions caractéristiques d'une station d'épuration déterminée, par exemple la hauteur et l'épaisseur de la paroi de séparation entre les compartiments.

Le dispositif selon l'invention peut disposer, en variante ou en outre, d'une longueur de la section verticale E réglable de façon à pouvoir l'adapter aux dimensions caractéristiques de la station d'épuration, telles que la hauteur totale, la hauteur de l'orifice et la hauteur souhaitée pour la poignée, etc.

Une autre forme de réalisation du dispositif prévoit que la position de la graduation F est réglable sur la section verticale E et/ou l'échelle de la graduation F est personnalisable pour pouvoir être adaptée aux besoins de la station d'épuration envisagée. Il peut s'agir par exemple d'une graduation montée sur un support qu'il suffira de fixer (collage, vissage, etc.) à l'endroit et à la hauteur souhaités, éventuellement même sur la station d'épuration.

Etant donné les conditions auxquelles le dispositif sera exposé dans une station d'épuration d'eau, il est fabriqué de préférence en un matériau inaltérable, par exemple en acier inoxydable, en aluminium, en résine synthétique, etc. Différents matériaux peuvent évidemment être combinés, notamment pour améliorer l'ergonomie du dispositif, par exemple pour réduire son poids ou pour adapter la forme de la poignée, mais également pour des raisons techniques ou économiques.

Le dispositif d'indication de vidange peut en outre comprendre d'autres éléments dont l'objectif est d'accroître sa facilité de manipulation, son caractère universel ou son installation dans la microstation d'épuration. Ainsi, il peut par exemple s'avérer nécessaire ou souhaitable de prévoir des rails ou des guides pour diriger le coulissement vertical du dispositif ou pour empêcher que le dispositif ne puisse tomber dans la cuve.

La présente invention concerne également l'utilisation d'un dispositif tel qu'il a été décrit ci-dessus, cette utilisation comprenant :
- le levage vertical du dispositif jusqu'à sentir une résistance exercée par la surface inférieure de la croûte de graisse sur le dispositif et
- la lecture de la graduation F indicative de l'urgence de vidange de la (micro)station d'épuration d'eau,
pour déterminer le moment (optimum) de vidange d'une (micro)station d'épuration d'eau à compartiment de dégraissage des eaux.

En procédant régulièrement à ce contrôle simple, propre et rapide de l'épaisseur de la croûte de graisse, l'utilisateur peut réduire sensiblement ses frais de vidange en évitant toute vidange prématurée et donc trop fréquente. Un autre atout est la réduction significative du risque d'obstruction éventuelle de sa station d'épuration avec tous les inconvénients que cette situation peut engendrer.

### Figures

La Fig. 1 présente une forme de réalisation du dispositif C conforme à la présente invention.

La Fig. 2 est un schéma (vue en coupe) du dispositif C monté dans une microstation d'épuration d'eau.

La Fig. 3 est un schéma (vue en plan) du dispositif C monté dans une microstation d'épuration d'eau.

## Revendications

1. Dispositif d'indication de vidange C pour (micro)station d'épuration d'eau (à compartiment de dégraissage des eaux), comprenant :
- une section horizontale D destinée à être placée sous la croûte de graisse et empêchant de lever le dispositif au-delà du niveau inférieur de la croûte de graisse,
- une section verticale E fixée en sa partie inférieure à la section horizontale D,
- une poignée I fixée à la partie supérieure de la section verticale E, servant à saisir et à soulever le dispositif, et
- une graduation F prévue sur la section verticale E permettant de juger du degré de nécessité de vidange.

2. Dispositif selon la revendication 1, comprenant en outre :
- un cavalier G fixé à la section verticale E et destiné à déposer ou à accrocher le dispositif sur une des cloisons de la (micro)station d'épuration de telle sorte que la section horizontale D se trouve à une hauteur utile et que la poignée I est facilement accessible.

3. Dispositif selon l'une quelconque des revendications 1 ou 2, **caractérisé en ce qu'**il est placé sous la trappe de visite de la (micro)station d'épuration.

4. Dispositif selon l'une quelconque des revendications 1 ou 2, **caractérisé en ce que** la poignée I dépasse de la trappe de visite de la (micro)station et **en ce qu'**il peut être utilisé sans ouvrir la trappe de visite.

5. Dispositif selon l'une quelconque des revendications 2 à 4, **caractérisé en ce que** la hauteur de fixation et/ou l'ouverture du cavalier G sont réglables de façon à pouvoir être adaptées aux dimensions caractéristiques d'une station d'épuration déterminée.

6. Dispositif selon l'une quelconque des revendications précédentes, **caractérisé en ce que** la longueur de la section verticale E est réglable de façon à pouvoir être adaptée aux dimensions caractéristiques d'une station d'épuration déterminée.

7. Dispositif selon l'une quelconque des revendications précédentes, **caractérisé en ce que** la position de la graduation F est réglable sur la section verticale E et/ou l'échelle de la graduation F est personnalisable de façon à pouvoir être adaptée aux dimensions caractéristiques d'une station d'épuration déterminée.

8. Dispositif selon l'une quelconque des revendications précédentes fabriqué en acier inoxydable.

9. Utilisation d'un dispositif selon l'une quelconque des revendications 1 à 8, comprenant :
- le levage vertical du dispositif jusqu'à sentir une résistance exercée par la surface inférieure de la croûte de graisse sur le dispositif et
- la lecture de la graduation F indicative de l'urgence de vidange de la (micro)station d'épuration d'eau,
pour déterminer le moment (optimum) de vidange d'une (micro)station d'épuration d'eau (à compartiment de dégraissage des eaux).
